(19) Europäisches Patentamt
European Patent Office
Office européen des brevets

(11) **EP 3 311 668 A1**

(12) **EUROPEAN PATENT APPLICATION**
published in accordance with Art. 153(4) EPC

(43) Date of publication:
**25.04.2018 Bulletin 2018/17**

(51) Int Cl.:
*A01N 47/12* [(2006.01)]    *A01N 25/12* [(2006.01)]
*A01N 25/14* [(2006.01)]    *A01N 43/10* [(2006.01)]
*A01N 43/40* [(2006.01)]    *A01N 43/653* [(2006.01)]
*A01P 3/00* [(2006.01)]    *A01N 43/50* [(2006.01)]
*A01N 47/38* [(2006.01)]    *A01N 55/00* [(2006.01)]

(21) Application number: **16803405.6**

(22) Date of filing: **01.06.2016**

(86) International application number:
**PCT/JP2016/066258**

(87) International publication number:
**WO 2016/194971 (08.12.2016 Gazette 2016/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.06.2015 JP 2015111036**

(71) Applicant: **Ishihara Sangyo Kaisha, Ltd.
Osaka-shi, Osaka 550-0002 (JP)**

(72) Inventors:
• **OGAWA Munekazu
  Osaka-shi
  Osaka 550-0002 (JP)**
• **TESHIMA Yoshiki
  Osaka-shi
  Osaka 550-0002 (JP)**

(74) Representative: **Müller-Boré & Partner
Patentanwälte PartG mbB
Friedenheimer Brücke 21
80639 München (DE)**

(54) **ANTIBACTERIAL COMPOSITION AND METHOD FOR CONTROL OF PLANT DISEASE**

(57)    There are provided a fungicide composition containing, as active ingredients, (a) valifenalate or a salt thereof and (b) at least one fungicide selected from the group consisting of isofetamid, pyriofenone, and azole-based compounds; and a method for controlling a plant disease, which includes applying the fungicide composition to a plant or soil.

EP 3 311 668 A1

**Description**

TECHNICAL FIELD

The present invention relates to a fungicide composition useful as an agricultural and horticultural fungicide having a remarkably improved control effect against plant diseases and a method for controlling a plant disease using the composition.

BACKGROUND ART

Patent Literature 1 discloses fungicidal effects of dipeptide compounds including valifenalate and a fungicidal composition composed of at least one selected from the dipeptide compounds and at least one selected from other fungicides such as cymoxanil and fosetyl aluminum.

CITED REFERENCES

PATENT LITERATURE

Patent Literature 1: EP-A-1028125

DISCLOSURE OF THE INVENTION

PROBLEMS TO BE SOLVED BY THE INVENTION

However, in Patent Literature 1, there is no description about a fungicide composition in which a fungicide such as isofetamid, pyriofenone, or an azole compound is combined.
Conventional fungicide compositions containing a dipeptide compound including valifenalate sometimes do not show a practically sufficient control effect on plant diseases depending on an applying situation, since it has an insufficient effect on particular plant diseases or its residual effectiveness lasts relatively a short period.
An object of the present invention is to provide a fungicide composition having a remarkably improved control effect on plant diseases by combining fungicides and a method for controlling a plant disease.

MEANS FOR SOLVING THE PROBLEMS

As a result of studies for solving the aforementioned problems, the present inventors have found that, when (a) valifenalate or a salt thereof and (b) at least one fungicide selected from the group consisting of isofetamid, pyriofenone, and azole-based compounds are used in combination, an unexpected excellent fungicidal effect is obtained as compared with the case of using each compound solely, and thus have accomplished the present invention.
That is, the present invention relates to a fungicide composition containing, as active ingredients, (a) valifenalate or a salt thereof (hereinafter, it is sometimes simply referred to as ingredient (a)) and (b) at least one fungicide selected from the group consisting of isofetamid, pyriofenone, and azole-based compounds (hereinafter, they are sometimes simply referred to as ingredient (b) in a lump). Moreover, the present invention also relates to a method for controlling a plant disease, which comprises applying the fungicide composition to a plant or soil.

EFFECT OF THE INVENTION

The fungicide composition of the present invention exhibits an effect more than an additive effect of individual fungicidal effects on plant diseases, i.e., a synergistic effect. More specifically, even in the case where the ingredient (a) and the ingredient (b) that are active ingredients of the fungicide composition of the present invention show only an insufficient control effect on a particular plant disease when they are used solely, the composition exhibits a synergistic control effect on the plant disease by using them in combination and achieves a practically sufficient control effect.

EMBODIMENTS FOR CARRYING OUT THE INVENTION

The ingredient (a) of the present invention, valifenalate is a compound described in pages 1,176 to 1,178 in The Pesticide Manual (16th edition; British Crop Production Council).
Isofetamid that is the ingredient (b) of the present invention is a compound described in page 149 of SHIBUYA INDEX 17th edition (SHIBUYA INDEX RESEARCH GROUP) and pyriofenone that is the ingredient (b) of the present invention is a compound described in pages 991 to 992 of The Pesticide Manual (16th edition; British Crop Production Council).

Azole-based compounds that are the ingredients (b) of the present invention include imazalil, oxpoconazole fumarate, pefurazoate, prochloraz, triflumizole, azaconazole, bromuconazole, bitertanol, cyproconazole, diclobutrazol, difenoconazole, diniconazole, epoxiconazole, etaconazole, fenbuconazole, fluquinconazole, flusilazole, flutriafol, furconazole, hexaconazole, imibenconazole, ipconazole, metconazole, myclobutanil, penconazole, propiconazole, prothioconazole, quinconazole, simeconazole, tebuconazole, tetraconazole, triadimefon, triadimenol, triticonazole, and the like. They are all compounds described as fungicides in The Pesticide Manual (16th edition; British Crop Production Council) and SHIBUYA INDEX 17th edition (SHIBUYA INDEX RESEARCH GROUP).

Of the ingredients (b) of the present invention, preferred are isofetamid, pyriofenone, tebuconazole, and difenoconazole that exhibit a higher synergistic effect when used in combination with the ingredient (a), and more preferred are isofetamid and pyriofenone.

The fungicide composition of the present invention is particularly useful as an agricultural and horticultural fungicide. Target diseases of the agricultural and horticultural fungicide, for example, include rice blast (Magnaporthe grisea), brown spot (Cochliobolus miyabeanus), sheath blight (Rhizoctonia solani), Bakanae disease (Gibberella fujikuroi), damping-off (Fusarium spp., Rhizopus spp., Pythium spp.) of rice; powdery mildew (Blumeria graminis), mottle leaf (Pyrenophora graminea), net blotch (Pyrenophora teres), Fusarium blight (Fusarium graminearum, Microdochium nivale), brown rust (Puccinia recondita), browning root rot (Pythium iwayamai), loose smut (Ustilago nuda), ergot (Claviceps purpurea), eye spot (Pseudocercosporella herpotrichoides), scald (Rhynchosporium secalis), speckled leaf blotch (Septoria tritici), glume blotch (Septoria nodorum), Typhula brown snow blight (Typhula incarnata), Typhula black snow blight (Typhula ishikariensis), Sclerotinia snow blight (Sclerotinia borealis), pink snow mold (Microdochium nivale), damping-off (Gaeumannomyces graminis) of wheat and barley; brown spot (Cochliobolus heterostrophus), rust (Puccinia sorghi), northern leaf blight (Setosphaeria turcica), leaf spot (Physoderma maydis), smut (Ustilago maydis) of maize; rust (Puccinia melanocephala), smut (Ustilago scitaminea), top rot (Gibberella fujikuroi), leaf blight (Pseudocercospora taiwanensis) of sugar cane; black spot (Diaporthe citri), scab (Elsinoe fawcettii), gray mold (Botrytis cinerea) of citruses; blossom blight (Monilinia mali), apple canker (Valsa ceratosperma), powdery mildew (Podosphaera leucotricha), Alternaria blotch (Alternaria alternata apple pathotype), black spot (Venturia inaequalis), anthracnose (Colletotrichum acutatum, Glomerella cingulata) of apple; black spot (Venturia nashicola), Alternaria leaf spot (Alternaria alternata Japanese pear pathotype), chocolate spot (Gymnosporangium asiaticum), late blight (Phytophthora cactorum) , anthracnose (Colletotrichum acutatum, Glomerella cingulata), ring spot (Botryosphaeria berengeriana), powdery mildew (Phyllactinia mali) of pears; brown rot (Monilinia fructicola), black spot (Cladosporium carpophilum), Phomopsis rot (Phomopsis sp.), bacterial shot hole (Leptosphaeria michotii) of peach; downy mildew (Plasmopara viticola), bird's eye rot (Elsinoe ampelina), ripe rot (Glomerella cingulata), powdery mildew (Uncinula necator), rust (Physppella ampelopsidis), gray mold (Botrytis cinerea) of grapes; anthracnose (Glomerella cingulata), anguler leaf spot (Cercospora kaki), circular leaf spot (Mycosphaerella nawae), gray mold (Botrytis cinerea), powdery mildew (Phyllactinia kakicola), late blight (Phytophthora citrophthora) of persimmon; powdery mildew (Sphaerotheca fuliginea), late blight (Phytophthora cryptogea), brown rot (Phytophthora capsici), Sclerotinia rot (Sclerotinia sclerotiorum), damping-off (Pythium debaryanum), gummy stem blight (Didymella bryoniae), Fusarium wilt (Fusarium oxysporum), Verticillium wilt (Verticillium dahliae), downy mildew (Pseudoperonospora cubensis) of watermelon; powdery mildew (Erysiphe polygoni, Sphaerotheca cucurbitae), late blight (Phytophthora melonis), Corynespora leaf spot (Corynespora cassiicola), Sclerotinia rot (Sclerotinia sclerotiorum), anthracnose (Colletotrichum orbiculare), gummy stem blight (Didymella bryoniae), Fusarium wilt (Fusarium oxysporum), damping-off (Pythium cucurbitacearum), gray mold (Botrytis cinerea), Verticillium wilt (Verticillium dahliae), downy mildew (Pseudoperonospora cubensis) of cucumber; powdery mildew (Sphaerotheca fuliginea), late blight (Phytophthora nicotianae), Corynespora leaf spot (Corynespora cassiicola), Sclerotinia rot (Sclerotinia sclerotiorum), gummy stem blight (Didymella bryoniae), Fusarium wilt (Fusarium oxysporum), damping-off (Pythium spinosum), gray mold (Botrytis cinerea), Verticillium wilt (Verticillium dahliae), downy mildew (Pseudoperonospora cubensis) of melon; powdery mildew (Sphaerotheca cucurbitae), late blight (Phytophthora capsici), Sclerotinia rot (Sclerotinia sclerotiorum), gummy stem blight (Didymella bryoniae), downy mildew (Pseudoperonospora cubensis) of pumpkin; Fusarium wilt (Fusarium oxysporum), gray mold (Botrytis cinerea), Sclerotinia rot (Sclerotinia sclerotiorum), southern blight (Sclerotium rolfsii), late blight (Phytophthora infestans), brown rot (Phytophthora capsici), brown spot (Phomopsis vexans), powdery mildew (Erysiphe cichoracerum, Oidiopsis sicula) of eggplant; late blight (Phytohthora infestans), early blight (Alternaria solani), black mole disease (Thanatephorus cucumeris), scab (Streptomyces spp.), bacterial soft rot (Pectobacterium carotovorum), powdery scab (Spongospora subterranean) of potato; late blight (Phytophthora infestans), fruit rot (Phytophthora capsici), early blight (Alternaria solani), leaf mold (Fulvia fulva), powdery mildew (Oidium lycopersici), brown rot (Phytophthora nicotianae), anthracnose (Colletotrichum gloeosporioides), damping-off (Pythium vexans, Rhizoctonia solani) of tomato; late blight (Phytophthora capsici), powdery mildew (Oidiopsis sicula), seedling damping-off (Rhizoctonia solani), leaf spot (Cercospora capsici) of sweet pepper; late blight (Phytophthora sp.), downy mildew (Peronospora effusa), damping-off (Pythium aphanidermatum), Fusarium wilt (Fusarium oxysporum), stock rot (Rhizoctonia solani), root rot (Aphanomyces cochlioides) of spinach; white late blight (Phytophthora porri), late blight (Phytophthora nicotianae), southern blight (Sclerotium rolfsii), damping-off (Rhizoctonia solani), Alternaria leaf spot (Alternaria porri), soft rot (Pectobacterium carotovorum), downy mildew (Peronospora destructor), rust (Puccinia allii) of green onions; Fusarium basal rot (Fusarium oxysporum), small rot (Ciborinia alli), gray mold (Botrytis cinerea), gray rot (Botrytis allii) of onion; downy mildew (Peronospora parasitica), clubroot (Plasmodiophora brassicae), white rust (Albugo macrospora), Alternaria leaf spot (Alternaria brassicae), white spot (Cercosporella brassicae), Sclerotinia rot (Sclerotinia sclerotiorum), verticillium wilt (Verticillium dahliae), bottom rot (Rhizoctonia solani), foot rot (Aphanomyces raphani), Pythium rot (Pythium ultimum) of cruciferous vegetables; Sclerotinia rot (Sclerotinia sclerotiorum), rust (Phakopsora pachyrhizi), southern blight (Sclerotium rolfsii), damping-off (Fusarium oxysporum), anthracnose (Colletotrichum truncatum, C. trifolii, Glomerella glycines, Gloeosporium sp.), gray mold (Botrytis cinerea) of pulses; downy mildew (Peronospora manshurica), stem blight (Phytophthora sojae), purple speck (Cercospora kikuchii), Sphaceloma scad (Elsinoe glycines), pod and stem blight (Diaporthe phaseolorum) of soybean; leaf spot (Mycosphaerella personata), brown leaf spot (Mycosphaerella arachidis) of peanuts; powdery mildew (Sphaerotheca aphanis), Fusarium wilt (Fusarium oxysporum), Verticillium wilt (Verticillium dahliae), late blight (Phytophthora cactorum), Alternaria leaf spot (Alternaria alternata), leaf spot (Mycosphaerella fragariae), anthracnose (Colletotrichum acutatum, Glomerella cingulata), gray mold (Botrytis cinerea), bud blight (Rhizoctonia solani) of strawberry; stem rot (Sclerotinia sclerotiorum), bottom rot (Rhizoctonia solani), damping-off (Pythium sp.), root rot (Fusarium oxysporum), gray mold (Botrytis cinerea), downy mildew (Bremia lactucae) of lettuce; Fusarium wilt (Fusarium oxysporum), powdery mildew (Erysiphe heraclei), black leaf blight (Alternaria dauci), stain rot (Pythium sulcatum), root rot (Rhizoctonia solani), leaf spot (Cercospora carotae) of carrot; net blister blight (Exobasidium reticulatum), white scab (Elsinoe leucospila), brown round spot (Pseudocercospora ocellata, Cerocospora chaae), blister blight (Exobasidium vexans), ring spot (Pestaltiopsis longiseta), anthracnose (Discula theae-sinensis) of tea; brown spot (Alternaria alternata), powdery mildew (Erysiphe cichoracearum), anthracnose (Colletotrichum cichoracearum) of tabacco; Cercospora leaf spot (Cercospora beticola) of sugar beet; black spot (Diplocarpon rosae), powdery mildew (Sphaerotheca pannosa), downy mildew (Peronospora sparsa), late blight (Phytophthora megasperma) of rose; powdery mildew (Erysiphe cichoracearum), late blight (Phytophthora cryptogea), Sclerotinia rot (Sclerotinia sclerotiorum), Alternaria leaf spot (Alternaria helianthi), downy mildew (Plasmopara halstedii), brown spot (Septoria helianthi) of sunflower;. Fairy ring disease (Bovista dermoxantha, Lycoperdon pusillum, Conocybe lactea, Vascellum curtisii), pseudo-leaf rot (Ceratobasidium spp.), Curvularia leaf blight (Curvularia geniculata), leaf rot (Rhizoctonia solani), pink snow mold (Microdochium nivale), Pythium disease (Pythium spp.), rust (Puccinia spp.), dollar spot (Sclerotinia homoeocarpa), Pythium shoot blight (Pythium aphanidermatum), browning root rot (Pythium iwayamai), Typhula snow blight (Typhula incarnata, T. isikariensis), anthracnose (Colletotrichum sp.) of turf grass, and the like.

The ingredient (a) and the ingredient (b) constituting the fungicide composition of the present invention may be mixed with various adjuvants in the same manner as conventional agricultural chemicals, and used in the form of a formulation such as a dust, granules, water-dispersible granules, a wettable powder, a water-based suspension concentrate, an oil-based suspension concentrate, water-soluble granules, an emulsifiable concentrate, a soluble concentrate, a paste, an aerosol, or an ultra low-volume formulation. However, so long as it is suitable for the purpose of the present invention, it may be formulated into any type of formulation which is commonly used in this field. Such adjuvants to be used in the formulation include solid carriers such as diatomaceous earth, slaked lime, calcium carbonate, talc, white carbon, kaolin, bentonite, a mixture of kaolinite and sericite, clay, sodium carbonate, sodium bicarbonate, mirabilite, zeolite, and starch; solvents such as water, toluene, xylene, solvent naphtha, dioxane, acetone, isophorone, methyl isobutyl ketone, chlorobenzene, cyclohexane, dimethyl sulfoxide, dimethylformamide, dimethylacetamide, N-methyl-2-pyrrolidone, and alcohols; anionic surfactants and spreaders such as a salt of fatty acid, a benzoate salt, an alkylsulfosuccinate salt, a dialkylsulfosuccinate salt, a polycarboxylate salt, a salt of alkylsulfuric acid ester, an alkyl sulfate salt, an alkylaryl sulfate salt, an alkyl diglycol ether sulfate salt, a salt of alcohol sulfuric acid ester, an alkyl sulfonate salt, an alkylaryl sulfonate salt, an aryl sulfonate salt, a lignin sulfonate salt, an alkyldiphenyl ether disulfonate salt, a polystyrene sulfonate salt, a salt of alkyl phosphoric acid ester, an alkylaryl phosphate salt, a styrylaryl phosphate salt, a salt of polyoxyethylene alkyl ether sulfuric acid ester, a polyoxyethylene alkylaryl ether sulfate salt, a salt of polyoxyethylene alkylaryl ether sulfuric acid ester, a polyoxyethylene alkyl ether phosphate salt, a salt of polyoxyethylene alkylaryl phosphoric acid ester, and a salt of a condensate of naphthalene sulfonate-formalin; nonionic surfactants and spreaders such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, a polyoxyethylene fatty acid ester, a polyoxyethylene sorbitan fatty acid ester, a polyoxyethylene glycerin fatty acid ester, a polyoxyethylene hydrogenated castor oil, and a polyoxypropylene fatty acid ester; vegetable and mineral oils such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil, and liquid paraffin; and the like. Such adjuvants may be selected for use among those known in this field, so long as such selection does not depart from the purpose of the present invention. Further, it is possible to use commonly employed various adjuvants such as a filler, a thickener, an anti-settling agent, an anti-freezing agent, a dispersion stabilizer, a phytotoxicity reducing agent, an anti-mold agent, etc. The blend ratio of the ingredients (a) and (b) to various adjuvants is usually from 0.005:99.995 to 95:5, preferably from 0.2:99.8 to 90:10, in a weight ratio. In actual use of such a formulation, it may be used as it is, or after it is diluted with a diluting agent such as water to a predetermined concentration and, as a case requires, various spreaders are added.

Additionally, the fungicide composition of the present invention may be used in combination with other agricultural chemicals, for example, a fungicide, an insecticide, a miticide, a nematicide, a soil pesticide, an antivirus agent, an attractant, a herbicide, and a plant growth regulating agent. In this case, a further excellent effect may be exhibited.

The active ingredient compounds (common names or test codes of the Japan Plant Protection Association) of the fungicides in such other agricultural chemicals may, for example, be appropriately selected from the following compound groups. Even in the case where particular description is absent, when various structural isomers such as salts, alkyl esters, and optical isomers are present for these compounds, they are included as a matter of course.

Anilinopyrimidine-based compounds such as mepanipyrim, pyrimethanil, and cyprodinil;
Triazolopyrimidine-based compounds such as 5-chloro-7-(4-methylpiperidin-1-yl)-6-(2,4,6-trifluorophenyl)[1,2,4]triazolo[1,5-a]pyrimidine;
Pyridinamine-based compounds such as fluazinam;
Quinoxaline-based compounds such as quinomethionate;
Dithiocarbamate-based compounds such as maneb, zineb, mancozeb, polycarbamate, metiram, propineb, and thiram;
Organochlorine-based compounds such as fthalide, chlorothalonil, and quintozene;
Imidazole-based compounds such as benomyl, thiophanate-methyl, carbendazim, thiabendazole, and fuberiazole;
Cyanoacetamide-based compounds such as cymoxanil;
Anilide-based compounds such as metalaxyl, metalaxyl-M (another name: mefenoxam), oxadixyl, ofurace, benalaxyl, benalaxyl-M (another name: kiralaxyl, chiralaxyl), furalaxyl, cyprofuram, carboxin, oxycarboxin, thifluzamide, boscalid, bixafen, isotianil, tiadinil, sedaxane, and pyraziflumid;
Sulfamide-based compounds such as dichlofluanid;
Copper-based compounds such as cupric hydroxide, oxine copper, anhydrous copper sulfate, copper nonylphenolsulfonate, 8-hydroxyquinoline copper, and dodecylbenzenesulfonic acid bisethylenediamine copper complex salt (II) (another name: DBEDC);
Organophosphorus-based compounds such as fosetyl-Al, tolclofos-Methyl, edifenphos, and iprobenfos;
Phthalimide-based compounds such as captan, captafol, and folpet;
Dicarboxyimide-based compounds such as procymidone, iprodione, and vinclozolin;
Benzanilide-based compounds such as flutolanil, mepronil, and benodanil;
Amide-based compounds such as penthiopyrad, penflufen, furametpyr, isopyrazam, silthiopham, fenoxanil, fenfuram, fluxapyroxad, benzovindiflupyr, and pydiflumetofen;
Benzamide-based compounds such as fluopyram and zoxamide;
Piperadine-based compounds such as triforine;
Pyridine-based compounds such as pyrifenox and pyrisoxazole;
Carbinol-based compounds such as fenarimol and nuarimol;
Piperidine-based compounds such as fenpropidin;
Morpholine-based compounds such as fenpropimorph and tridemorph;
Organotin-based compounds such as fentin hydroxide and fentin acetate;
Urea-based compounds such as pencycuron;
Carboxylic acid amide-based compounds such as dimethomorph, flumorph, pyrimorph, iprovalicarb, benthiavalicarb-isopropyl, and mandipropamid;
Phenylcarbamate-based compounds such as diethofencarb;
Cyanopyrrole-based compounds such as fludioxonil and fenpiclonil;
Strobilurin-based compounds such as azoxystrobin, kresoxim-methyl, metominostrobin, trifloxystrobin, picoxystrobin, oryzastrobin, dimoxystrobin, pyraclostrobin, fluoxastrobin, Enestroburin, Pyraoxystrobin, Pyrametostrobin, coumoxystrobin, enoxastrobin, fenaminstrobin, flufenoxystrobin, triclopyricarb, and mandestrobin;
Oxazolidinone-based compounds such as famoxadone;
Thiazolecarboxamide-based compounds such as ethaboxam;
Imidazolinone-based compounds such as fenamidone;
Hydroxyanilide-based compounds such as fenhexamid;
Benzenesulfonamide-based compounds such as flusulfamide;
Oxime ether-based compounds such as cyflufenamid;
Anthraquinone-based compounds such as dithianon;
Crotonic acid-based compounds such as meptyldinocap;
Antibiotics such as validamycin, kasugamycin, and polyoxins;
Guanidine-based compounds such as iminoctadine and dodine;

Quinoline-based compounds such as tebufloquin, quinoxyfen, and quinofumelin;

Thiazolidine-based compounds such as flutianil;

Carbamate-based compounds such as propamocarb hydrochloride and tolprocarb;

Sulfonamide-based compounds such as amisulbrom and cyazofamid;

Aryl phenyl ketone-based compounds such as metrafenone;

Sulfur-based compounds such as sulfur and lime sulfur;

As other compounds, there may be mentioned tricyclazole, probenazole, pyribencarb, isoprothiolane, pyroquilon, diclomezine, chloropicrin, dazomet, metam-sodium, nicobifen, diclocymet, proquinazid, mandipropamid, fluopicolide, carpropamid, ferimzone, spiroxamine, fenpyrazamine, ametoctradin, oxathiapiprolin, picarbutrazox, dipymetitrone, SB-4303, BAF-1107, MIF-1002, KUF-1411, BAF-1120, BAF-1510, BAF-1511, NF-180, S-2399, SYJ-264, SYJ-259,AKD-5195, BYF-1303, and the like;

Microorganism fungicides such as Bacillus amyloliqefaciens strain QST713, Bacillus amyloliqefaciens strain FZB24, Bacillus amyloliqefaciens strain MBI600, Bacillus amyloliqefaciens strain D747, Pseudomonas fluorescens, Bacillus subtilis, and Trichoderma atroviride SKT-1; and

Plant extracts such as Tea tree oil.

The active ingredient compounds (common names or test codes of the Japan Plant Protection Association) of the insecticides, miticides, nematicides, or soil pesticides, i.e., pesticides in such other agricultural chemicals may, for example, be appropriately selected from the following compound groups. Even in the case where particular description is absent, when various structural isomers such as salts, alkyl esters, and optical isomers are present for these compounds, they are included as a matter of course.

Organic phosphate ester-based compounds such as profenofos, dichlorvos, fenamiphos, fenitrothion, EPN((RS)-(O-ethyl O-4-nitrophenyl phenylphosphonothioate)), diazinon, chlorpyrifos, chlorpyrifos-methyl, acephate, prothiofos, fosthiazate, cadusafos, disulfoton, isoxathion, isofenphos, ethion, etrimfos, quinalphos, dimethylvinphos, dimethoate, sulprofos, thiometon, vamidothion, pyraclofos, pyridaphenthion, pirimiphos-methyl, propaphos, phosalone, formothion, malathion, tetrachlorvinphos, chlorfenvinphos, cyanophos, trichlorfon, methidathion, phenthoate, oxydeprofos (another name: ESP), azinphos-methyl, fenthion, heptenophos, methoxychlor, parathion, phosphocarb, demeton-S-methyl, monocrotophos, methamidophos, imicyafos, parathion-methyl, terbufos, phosphamidon, phosmet, and phorate;

Carbamate-based compounds such as carbaryl, propoxur, aldicarb, carbofuran, thiodicarb, methomyl, oxamyl, ethiofencarb, pirimicarb, fenobucarb, carbosulfan, benfuracarb, bendiocarb, furathiocarb, isoprocarb, metolcarb, xylylcarb, XMC (3,5-xylyl methylcarbamate), and fenothiocarb;

Nereistoxin derivatives such as cartap, thiocyclam, thiocyclam oxalate, thiocyclam hydrochloride, bensultap, thiosultap, monosultap (another name: thiosultap-monosodium), bisultap (another name: thiosultap-disodium), and polythialan;

Organochlorine-based compounds such as dicofol, tetradifon, endosulfan, dienochlor, and dieldrin;

Organometallic compounds such as fenbutatin oxide and cyhexatin;

Pyrethroid-based compounds such as fenvalerate, permethrin, cypermethrin, alpha-cypermethrin, zeta-cypermethrin, theta-cypermethrin, beta-cypermethrin, deltamethrin, cyhalothrin, gamma-cyhalothrin, lambda-cyhalothrin, tefluthrin, kappa-tefluthrin, ethofenprox, flufenprox, cyfluthrin, beta-cyfluthrin, fenpropathrin, flucythrinate, fluvalinate, cycloprothrin, pyrethrins, esfenvalerate, tetramethrin, resmethrin, protrifenbute, bifenthrin, kappa-bifenthrin, acrinathrin, allethrin, tau-fluvalinate, tralomethrin, profluthrin, metofluthrin, epsilon-metofluthrin, heptafluthrin, phenothrin, flumethrin, momfluorothrin, epsilon-momfluorothrin, silafluofen, and chloroprallethrin;

Benzoylurea-based compounds such as diflubenzuron, chlorfluazuron, teflubenzuron, flufenoxuron, lufenuron, novaluron, triflumuron, hexaflumuron, bistrifluron, noviflumuron, and fluazuron;

Juvenile hormone-like compounds such as methoprene, pyriproxyfen, fenoxycarb, and diofenolan;

Pyridazinone-based compounds such as pyridaben;

Pyrazole-based compounds such as fenpyroximate, fipronil, tebufenpyrad, ethiprole, tolfenpyrad, acetoprole, pyrafluprole, pyriprole, cyenopyrafen, pyflubumide, and flufiprole;

Neonicotinoid-based compounds such as imidacloprid, nitenpyram, acetamiprid, thiacloprid, thiamethoxam, clothianidin, nidinotefuran, dinotefuran, and nithiazine;

Hydrazine-based compounds such as tebufenozide, methoxyfenozide, chromafenozide, and halofenozide;

Pyridine-based compounds such as pyridalyl and flonicamid;

Cyclic keto-enol-based compounds such as spirodiclofen, spiromesifen, and spirotetramat;

Strobilurin-based compounds such as fluacrypyrim and pyriminostrobin;

Pyrimidinamine-based compounds such as flufenerim and pyrimidifen;

Organosulfur compounds such as malathion;

Urea-based compound such as flufenoxuron;

Triazine-based compound such as cyromazine;

Hydrazone-based compound such as hydramethylnon;

Diamide-based compound such as flubendiamide, chlorantraniliprole, cyantraniliprole, cyclaniliprole, tetraniliprole, broflanilide, and cyhalodiamide;

Thiourea-based compound such as diafenthiuron and chloromethiuron;

Formamidine-based compounds such as amitraz, chlordimeform, and chloromebuform;

And, as other compounds, there may be mentioned compounds such as buprofezin, hexythiazox, triazamate, pymetrozine, chlorfenapyr, indoxacarb, acequinocyl, etoxazole, 1,3-dichloropropene, benclothiaz, bifenazate, propargite, clofentezine, metaflumizone, cyflumetofen, pyrifluquinazone, fenazaquin, amidoflumet, sulfluramid, hydramethylnon, metaldehyde, sulfoxaflor, fluensulfone, verbutin, dicloromezotiaz, triflumezopyrim, fluhexafon, tioxazafen, afidopyropen, flometoquin, flupyradifurone, fluazaindolizine, and fluxametamide.

Moreover, the composition of the present invention may be applied in combination with the following compounds.

Microorganism agricultural chemicals such as crystal protein toxins, insect pathogenic virus agents, insect pathogenic filamentous fungus agents, nematode pathogenic filamentous fungus agents produced by Bacillus thuringiensis aizawai, Bacillus thuringiensis kurstaki, Bacillus thuringiensis israelensis, Bacillus thuringiensis japonensis, Bacillus thuringiensis tenebrionis, or Bacillus thuringiensis;

Antibiotics and semi-synthetic antibiotics such as avermectin, emamectin Benzoate, milbemectin, milbemycin, spinosad, ivermectin, lepimectin, abamectin, emamectin, and spinetoram;

Natural products such as azadirachtin, rotenone, and ryanodine;

Repellents such as deet; and

Physical pest control agents such as paraffin oil and mineral oil.

In the fungicide composition of the present invention, a proper mixing weight ratio of the ingredient (a) to the ingredient (b) is usually from 1:10,000 to 10,000:1, preferably from 1:10,000 to 500:1, more preferably from 1:1,000 to 50:1, and particularly preferably from 1:100 to 5:1.

The present invention also includes a method for controlling a plant disease, which comprises applying the fungicide composition of the present invention to an agricultural or horticultural plant. The use concentration of the fungicide composition of the present invention varies depending on objective plants, method of use, formulation, dose, and the like and can not be generally defined. However, in the case of foliage treatment, it is prepared so that the ingredient (a) will be preferably from 1,000 to 1 weight ppm, more preferably from 200 to 1 weight ppm and the ingredient (b) will be preferably from 1,000 to 1 weight ppm, more preferably from 500 to 10 weight ppm. In the case of soil treatment, it is prepared so that the ingredient (a) will be preferably from 10,000 to 1 g/ha, more preferably from 1,000 to 10 g/ha and the ingredient (b) will be preferably from 10,000 to 1 g/ha, more preferably 1,000 to 10 g/ha.

The various formulations or diluted ones thereof of the fungicide composition of the present invention may be applied by an application method which is commonly conducted, i.e., spreading (such as spreading, spraying, misting, atomizing, grain diffusing, or application on water surface), soil application (such as mixing or irrigation), surface application (such as coating, dust coating, or covering), or the like. Further, it may be applied also by so-called ultra low-volume application method. In this method, the formulation may contain 100% of the active ingredient.

The following will describe desirable embodiments of the present invention.

[1] A fungicide composition comprising, as active ingredients, (a) valifenalate or a salt thereof and (b) at least one fungicide selected from the group consisting of isofetamid, pyriofenone, and azole-based compounds.

[2] The fungicide composition described in [1], wherein the azole-based compound is imazalil, oxpoconazole fumarate, pefurazoate, prochloraz, triflumizole, azaconazole, bromuconazole, bitertanol, cyproconazole, diclobutrazol, difenoconazole, diniconazole, epoxiconazole, etaconazole, fenbuconazole, fluquinconazole, flusilazole, flutriafol, furconazole, hexaconazole, imibenconazole, ipconazole, metconazole, myclobutanil, penconazole, propiconazole, prothioconazole, quinconazole, simeconazole, tebuconazole, tetraconazole, triadimefon, triadimenol, or triticonazole.

[3] The fungicide composition described in [1] or [2], wherein the azole-based compound is tebuconazole or difenoconazole.

[4] The fungicide composition described in any one of [1] to [3], wherein the mixing weight ratio of (a) valifenalate or the salt thereof to (b) the fungicide is from 1:10,000 to 10,000:1.

[5] A method for controlling a plant disease, which comprises applying a fungicide composition containing, as active ingredients, (a) valifenalate or a salt thereof and (b) at least one fungicide selected from the group consisting of isofetamid, pyriofenone, and azole-based compounds to a plant or soil.

[6] The method for controlling a plant disease described in [5], wherein the azole-based compound is imazalil, oxpoconazole fumarate, pefurazoate, prochloraz, triflumizole, azaconazole, bromuconazole, bitertanol, cyproconazole, diclobutrazol, difenoconazole, diniconazole, epoxiconazole, etaconazole, fenbuconazole, fluquinconazole, flusilazole, flutriafol, furconazole, hexaconazole, imibenconazole, ipconazole, metconazole, myclobutanil, penconazole, propiconazole, prothioconazole, quinconazole, simeconazole, tebuconazole, tetraconazole, triadimefon, triadimenol, or triticonazole.

[7] The method for controlling a plant disease described in [5] or [6], wherein the azole-based compound is tebuconazole or difenoconazole.

EXAMPLES

Test Examples relevant to the present invention will be described in the following but they should not be construed as limiting the present invention.

Test Example 1: Test on Control Effect Against Tomato Late Blight

Tomato (cultivar: Yellow Pear) was cultivated in a plastic pot having a diameter of 7.5 cm, and when it reached 4-leaf stage, an aqueous chemical solution containing each test compound adjusted to a prescribed concentration was spread by means of a spray gun (amount of spread water: 1,000 L/ha). After the spread chemical solution was dried, a suspension of zoosporangia of tomato late blight was sprayed and inoculated and the whole was maintained in a moist chamber at 20°C for 6 hours. Then, after it was maintained in an incubator at 20°C for 3 days, a disease index at each leaf position as shown below was determined and disease severity was calculated according to the following calculation formula to determine a control value. The results are shown in Tables 1 to 4. Incidentally, the disease severity in the untreated section was calculated after performing similar operations as in the treated section except that water was spread instead of the chemical solution by a spray gun.

Disease index

0: no lesion speck is observed.

1: lesion area is less than 10% of leaf area.

2: lesion area is from 10% to less than 25% of leaf area.

3: lesion area is from 25% to less than 50% of leaf area.

4: lesion area is 50% or more of leaf area.

$$\text{Disease Severity} = [(0{\times}A+1{\times}B+2{\times}C+3{\times}D+4{\times}E)/\{4{\times}(A+B+C+D+E)\}]{\times}100$$

In the formula, A: number of leaves of disease index 0, B: number of leaves of disease index 1, C: number of leaves of disease index 2, D: number of leaves of disease index 3, E: number of leaves of disease index 4.

$$\text{Control value} = (1-a/b){\times}100$$

a: disease severity in treated section, b: disease severity in untreated section

$$\text{Colby's formula} = (X+Y)-XY/100$$

X: control value in single use of ingredient (a)
Y: control value in single use of ingredient (b)

Based on the obtained control value, the theoretical value (control value) was calculated using the Colby's formula. The theoretical value according to the Colby's formula was also shown in brackets ( ) in Tables 1 to 4.
In the case where the experimental value is higher than the theoretical value, the fungicide composition of the present invention has a synergistic effect against tomato late blight.

[Table 1]

| Valifenalate |  | Isofetamid |  |  |  |  |
|---|---|---|---|---|---|---|
|  | 300 ppm | 150 ppm | 75 ppm | 37.5 ppm | 18.8 ppm | 0 ppm |
| 18.8 ppm | 96 (77) | 96 (76) | 96 (75) | 96 (75) | 88 (75) | 75 |
| 9.4 ppm | 92 (73) | 88 (72) | 88 (71) | 88 (71) | 83 (71) | 71 |
| 4.7 ppm | 83 (58) | 79 (56) | 79 (54) | 79 (54) | 71 (54) | 54 |
| 2.3 ppm | 71 (47) | 63 (44) | 58 (42) | 58 (42) | 58 (42) | 42 |
| 1.2 ppm | 63 (35) | 63 (32) | 50 (29) | 50 (29) | 46 (29) | 29 |
| 0 ppm | **8** | **4** | 0 | 0 | 0 |  |

Disease Severity in untreated section: 100

[Table 2]

| Valifenalate |  | Pyriofenone |  |  |  |
|---|---|---|---|---|---|
|  | 100 ppm | 50 ppm | 25 ppm | 12.5 ppm | 0 ppm |
| 18.8 ppm | 92 (79) | 88 (79) | 84 (79) | 84 (79) | 79 |
| 9.4 ppm | 71 (63) | 71 (63) | 71 (63) | 67 (63) | 63 |
| 4.7 ppm | 71 (50) | 71 (50) | 67 (50) | 63 (50) | 50 |
| 2.3 ppm | 54 (25) | 50 (25) | 33 (25) | 34 (25) | 25 |
| 1.2 ppm | 38 (13) | 34 (13) | 25 (13) | 25 (13) | 13 |
| 0 ppm | 0 | 0 | 0 | 0 |  |

Disease Severity in untreated section: 100

[Table 3]

| Valifenalate |  | Tebuconazole |  |  |  |
|---|---|---|---|---|---|
|  | 100 ppm | 50 ppm | 25 ppm | 12.5 ppm | 0 ppm |
| 37.5 ppm | 100 (73) | 92 (72) | 92 (72) | 92 (72) | 72 |
| 18.8 ppm | 92 (70) | 92 (68) | 83 (68) | 83 (68) | 67 |
| 9.4 ppm | 88 (66) | 79 (64) | 79 (64) | 79 (64) | 63 |
| 4.7 ppm | 75 (50) | 67 (48) | 67 (48) | 67 (48) | 46 |
| 2.3 ppm | 67 (38) | 58 (36) | 50 (36) | 46 (36) | 33 |
| 0 ppm | 8 | 4 | 4 | 4 |  |

Disease Severity in untreated section: 100

[Table 4]

| Valifenalate |  | Difenoconazole |  |  |  |
|---|---|---|---|---|---|
|  | 100 ppm | 50 ppm | 25 ppm | 12.5 ppm | 0 ppm |
| 9.4 ppm | 100 (81) | 96 (80) | 96 (78) | 88 (78) | 75 |
| 4.7 ppm | 96 (69) | 96 (67) | 88 (63) | 88 (63) | 58 |
| 2.3 ppm | 96 (66) | 92 (64) | 84 (60) | 80 (60) | 54 |
| 1.2 ppm | 75 (60) | 75 (57) | 71 (53) | 63 (53) | 46 |

(continued)

| Valifenalate | Difenoconazole | | | | |
|---|---|---|---|---|---|
| | 100 ppm | 50 ppm | 25 ppm | 12.5 ppm | 0 ppm |
| 0 ppm | 25 | 21 | 13 | 13 | |

Disease Severity in untreated section: 100

The following will describe Formulation Examples of the present invention, but it should be understood that the amount of formulation, type of formulation, and the like in the present invention are not limited to the described examples alone.

Formulation Example 1

(A) Kaolin                                                             78 parts by weight

(B) Condensate of sodium β-naphthalenesulfonate-formalin    2 parts by weight

(C) Polyoxyethylene alkylaryl sulfate                             5 parts by weight

(D) Hydrated amorphous silicon dioxide                          15 parts by weight

A mixture of the above components, an ingredient (a), and an ingredient (b) are mixed in a weight ratio of 8:1:1 to obtain a wettable powder.

Formulation Example 2

(A) Ingredient (a)              0.5 part by weight

(B) Ingredient (b)              0.5 part by weight

(C) Bentonite                   20 parts by weight

(D) Kaolin                      74 parts by weight

(E) Sodium lignin sulfonate      5 parts by weight

To the above components, a suitable amount of water required for granulation is added, followed by mixing and granulating to obtain granules.

Formulation Example 3

(A) Ingredient (a)     2 parts by weight

(B) Ingredient (b)     3 parts by weight

(C) Talc               95 parts by weight

The above components are uniformly mixed to obtain a dust.

While the present invention has been described in detail and with reference to specific embodiments thereof, it will be apparent to one skilled in the art that various changes and modifications can be made therein without departing from the spirit and scope thereof. The present application is based on Japanese Patent Application No. 2015-111036 filed on June 1, 2015, and the contents are incorporated herein by reference.

**Claims**

1. A fungicide composition comprising, as active ingredients, (a) valifenalate or a salt thereof and (b) at least one fungicide selected from the group consisting of isofetamid, pyriofenone, and azole-based compounds.

2. The fungicide composition according to claim 1, wherein the azole-based compound is imazalil, oxpoconazole fumarate, pefurazoate, prochloraz, triflumizole, azaconazole, bromuconazole, bitertanol, cyproconazole, diclobutrazol, difenoconazole, diniconazole, epoxiconazole, etaconazole, fenbuconazole, fluquinconazole, flusilazole, flutriafol, furconazole, hexaconazole, imibenconazole, ipconazole, metconazole, myclobutanil, penconazole, propiconazole, prothioconazole, quinconazole, simeconazole, tebuconazole, tetraconazole, triadimefon, triadimenol, or triticonazole.

3. The fungicide composition according to claim 1, wherein the azole-based compound is tebuconazole or difenoconazole.

4. The fungicide composition according to claim 1, wherein the mixing weight ratio of (a) valifenalate or the salt thereof to (b) the fungicide is from 1:10,000 to 10,000:1.

5. A method for controlling a plant disease, which comprises applying a fungicide composition containing, as active ingredients, (a) valifenalate or a salt thereof and (b) at least one fungicide selected from the group consisting of isofetamid, pyriofenone, and azole-based compounds to a plant or soil.

6. The method for controlling a plant disease according to claim 5, wherein the azole-based compound is imazalil, oxpoconazole fumarate, pefurazoate, prochloraz, triflumizole, azaconazole, bromuconazole, bitertanol, cyproconazole, diclobutrazol, difenoconazole, diniconazole, epoxiconazole, etaconazole, fenbuconazole, fluquinconazole, flusilazole, flutriafol, furconazole, hexaconazole, imibenconazole, ipconazole, metconazole, myclobutanil, penconazole, propiconazole, prothioconazole, quinconazole, simeconazole, tebuconazole, tetraconazole, triadimefon, triadimenol, or triticonazole.

7. The method for controlling a plant disease according to claim 5, wherein the azole-based compound is tebuconazole or difenoconazole.

## INTERNATIONAL SEARCH REPORT

| International application No. |
| --- |
| PCT/JP2016/066258 |

### A. CLASSIFICATION OF SUBJECT MATTER

A01N47/12(2006.01)i, A01N25/12(2006.01)i, A01N25/14(2006.01)i, A01N43/10 (2006.01)i, A01N43/40(2006.01)i, A01N43/653(2006.01)i, A01P3/00(2006.01)i, A01N43/50(2006.01)n, A01N47/38(2006.01)n, A01N55/00(2006.01)n

According to International Patent Classification (IPC) or to both national classification and IPC

### B. FIELDS SEARCHED

Minimum documentation searched (classification system followed by classification symbols)
A01N47/12, A01N25/12, A01N25/14, A01N43/10, A01N43/40, A01N43/653, A01P3/00, A01N43/50, A01N47/38, A01N55/00

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2009/055514 A2 (E. I. DU PONT DE NEMOURS AND CO.),<br>30 April 2009 (30.04.2009),<br>claims; page 312, line 25 to page 313, line 37; page 355, lines 27 to 32; page 370, lines 10 to 20; page 372, lines 21 to 25; pages 436 to 438, table K, page 437, lines 7 to 21; pages 450 to 453, table P, page 450, line 22 to page 451, line 6<br>& JP 2011-500826 A    & JP 5364712 B<br>& US 2010/0240619 A1    & EP 2187748 A2<br>& AU 2008316880 A    & MX 2010004393 A<br>& CN 101969781 A    & IL 204634 A<br>& CA 2699933 A    & RU 2010120684 A<br>& IL 238893 A    & UY 31416 A<br>& AR 69368 A    & PE 9742009 A<br>& KR 10-2010-0083179 A    & TW 200917963 A | 1,2,4-6<br>3,7 |

☒ Further documents are listed in the continuation of Box C. ☐ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 August 2016 (03.08.16) | Date of mailing of the international search report<br>16 August 2016 (16.08.16) |
| --- | --- |
| Name and mailing address of the ISA/<br>  Japan Patent Office<br>  3-4-3,Kasumigaseki,Chiyoda-ku,<br>  Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/066258

C (Continuation).    DOCUMENTS CONSIDERED TO BE RELEVANT

| Category* | Citation of document, with indication, where appropriate, of the relevant passages | Relevant to claim No. |
|---|---|---|
| | & CO 6382166 A          & GT 201000114 A<br>& VN 24622 A            & UA 101481 C<br>& MY 150537 A | |
| X<br>A | US 2011/0319430 A1  (E.I. Du pont Nemours and<br>Co.),<br>29 December 2011 (29.12.2011),<br>claims; paragraphs [0343] to [0345]; pages 59<br>to 62, table A1, 61st, 64th mixtures; paragraph<br>[0611]<br>& JP 2012-519693 A      & JP 2015-172062 A<br>& US 2015/0230467 A1    & WO 2010/101973 A1<br>& EP 2403834 A1         & EP 2966063 A1<br>& UY 32472 A            & AR 75713 A<br>& CA 2750862 A          & IL 214184 D<br>& TW 201032717 A        & KR 10-2011-0122222 A<br>& AU 2010221440 A       & MX 2011008900 A<br>& CO 6361933 A          & CN 102421756 A<br>& PE 1012012 A          & PE 392013 A<br>& NZ 594181 A           & RU 2011139893 A<br>& ES 2562178 T          & DK 2403834 T<br>& HR P20160111 T        & SI 2403834 T<br>& PT 2403834 E | 1,4,5<br>2,3,6,7 |
| X<br>A | US 2013/0040969 A1  (Gewehr Markus),<br>14 February 2013 (14.02.2013),<br>claims; pages 11 to 45, table C, compositions<br>in which components 3 are T-82; paragraphs<br>[0128], [0185]<br>& JP 2013-525320 A      & WO 2011/131602 A2<br>& EP 2560492 A2         & CN 102946734 A | 1,4,5<br>2,3,6,7 |
| X<br>A | WO 2013/010894 A1  (BASF SE),<br>24 January 2013 (24.01.2013),<br>claims; page 15, lines 18 to 38; page 21, lines<br>8 to 12; pages 30 to 42, table B, page 36,<br>mixture B-188<br>& JP 2014-520833 A      & US 2014/0141974 A1<br>& EP 2731936 A1         & CN 103814017 A | 1,4,5<br>2,3,6,7 |
| X<br>A | WO 2014/108299 A1  (BASF SE),<br>17 July 2014 (17.07.2014),<br>claims; page 112, line 39 to page 113, line 15;<br>page 119, lines 16 to 19; pages 138 to 152,<br>table C, page 145, composition C-198<br>& US 2015/0351399 A1     & EP 2943486 A1<br>& CN 104903315 A | 1,4,5<br>2,3,6,7 |

Form PCT/ISA/210 (continuation of second sheet) (January 2015)

**INTERNATIONAL SEARCH REPORT**

International application No.

PCT/JP2016/066258

C (Continuation).  DOCUMENTS CONSIDERED TO BE RELEVANT

| Category* | Citation of document, with indication, where appropriate, of the relevant passages | Relevant to claim No. |
|---|---|---|
| X<br>A | EP 1028125 A1  (Isagro Ricerca S.r.l.),<br>16 August 2000 (16.08.2000),<br>claims; paragraphs [0022], [0036]; examples 1,<br>6<br>& JP 2000-198797 A       & US 6448228 B1<br>& DE 69914450 D          & DE 69914450 T<br>& IT MI982583 A          & SI 1028125 T<br>& AU 6062899 A           & BR 9905751 A<br>& NZ 501346 A            & AU 756519 B<br>& AT 258557 T            & DK 1028125 T<br>& ES 2213979 T           & PT 1028125 E<br>& AR 21380 A             & IT MI982583 A1 | 1,2,4-6<br>3,7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1028125 A

- JP 2015111036 A

**Non-patent literature cited in the description**

- SHIBUYA INDEX. SHIBUYA INDEX RESEARCH GROUP, 149
- The Pesticide Manual (16th edition. British Crop Production Council, 991-992

- The Pesticide Manual. British Crop Production Council
- SHIBUYA INDEX. SHIBUYA INDEX RESEARCH GROUP